# EUROPEAN PATENT APPLICATION

(11) **EP 4 557 797 A1**
(43) Date of publication of application: **21.05.2025**
(21) Application number: 23210261.6
(22) Date of filing: 16.11.2023
(51) Int. Cl.: H04W 12/63, H04W 12/08, H04L 9/40

(54) **TASK-BASED EPHEMERAL ACCESS**

(71) Applicant: Koninklijke Philips N.V., 5656 AG Eindhoven (NL)
(72) Inventor: CRONIN, Harry Michael, Eindhoven (NL); WALKER, Nicholas Simon, Eindhoven (NL); GARCIA MORCHON, Oscar, Eindhoven (NL); KAMPERMAN, Franciscus Lucas Antonius Johannes, Eindhoven (NL)
(74) Representative: Philips Intellectual Property & Standards

(57) **Abstract**

The invention proposes a system and method for ephemeral access control, wherein permissions (e.g., credentials) are deliberately propagated from a trusted device to nearby devices, such that the nearby devices get permission to perform a given task on condition that a user of the trusted device has granted permission for the same or a similar task to be performed on the trusted device.

## Description

### FIELD OF THE INVENTION

The invention relates to the fields of access control for wired or wireless networks, such as - but not limited to - Internet of Things (IoT) networks or cellular (e.g., 3GPP) networks.

### BACKGROUND OF THE INVENTION

Ephemeral access control refers to the idea of giving different access control privileges to users in the vicinity of wireless devices (e.g., IoT devices), provided that the users are in a defined range. In some systems, users' trusted devices (e.g., smartphones) may be used to enable the users to actively modify permissions (e.g., access rights) of non-trusted external devices in a fixed geographical range and to set a timeout to remove these permissions after a fixed interval.

Such ephemeral access may for example allow users to load their own music service account on to a smart speaker which they do not own, only for a time period when they are near the smart speaker. In general, the goals of ephemeral access systems are to place a low burden on the user while making sure the correct permissions are granted. However, in access control systems where access control policies are focused on the device level, user-centric permissions are not supported due to the difficulty in allowing possibly unknown users to have fine permission control without placing a significant burden on them at run-time (e.g., repeatedly asking permission for the same task).

As a result, conventional ephemeral access control systems do not offer an easy or intuitive way for a user to achieve fine-grained permissions control but instead require manual setup and/or user inputs at run-time. Specifically, when IoT devices are configured for user sensing, a user who is a sensing target may wish to have a way to modify permissions relating to what can be sensed, over what range, and with what precision. This would involve a significant and non-intuitive setup by the target user.

### SUMMARY OF THE INVENTION

It is an object of the present invention to provide an access control system and method, by which an easy and intuitive task-based permission control can be achieved.

This object is achieved by an apparatus as claimed in claim 1, by a mobile user device as claimed in claim 11, by a hub as claimed in claim 12, by a method as claimed in claim 14, and by a computer program product as claimed in claim 15.

According to an aspect related to a mobile user device (e.g., a smart phone, tablet, laptop etc.) or a hub (e.g., a smart home hub or cellular access device), an apparatus adapted to control transfer, to a second device from a first device, of a user permission information for accessing or controlling the second device from or through a first device based on one or more of a physical proximity of the first and second devices, a task to be performed by the second device based on the user permission information, user permissions information provided on the first device relevant to the task, and the situation context that may include, e.g., an emergency situation.

According to an aspect, a mobile used device comprising an apparatus of the first aspect is provided.

According to an aspect, a hub comprising an apparatus of the first aspect is provided.

According to an aspect, a method is provided for controlling access to a wireless network, the method comprising controlling transfer of a user permission information for accessing a second device from a first device to the second device based on one or more of a physical proximity of the first and second devices, a task to be performed by the second device based on the user permission information, and user permissions information provided on the first device relevant to the task.

Finally, according to an aspect, a computer program product is provided, which comprises code means for producing the steps of the method of the third or fourth aspect when run on a computer device.

Accordingly, an ephemeral access control system can be provided, in which permissions from a first device (e.g., a trusted device such as a smart hub or a user's smartphone) are deliberately 'leaked' (i.e., propagated or transferred) to nearby IoT devices or smart devices or another smart hub, such that the IoT devices or smart devices are provided with permission(s) to perform a given task (target task), provided that the user of the trusted first device has granted permission for the same or a similar task to be performed on the first device. The transferred user permissions information may be subject to a negotiation mechanism which ensures that the target devices (second device(s) do not inherit "too many" permissions for the target task. The user permissions information can include credentials (e.g., cryptographic keys) that allow the devices to connect to each other.

In this way, an access control system can provide user permissions of a trusted first device to a second device depending on its physical proximity or other context such as emergency situation. This enables seamless third-party access to smart home devices, which is specific to a given user, without significant effort from the user either at setup or at run-time, since for many relevant tasks the permissions may have already been granted for use by the trusted first device (e.g., smart phone).

The proposed access control system allows for temporary or ephemeral access to network devices or resources in the network devices with no effort from a user at run-time and minimal to no effort from the user during setup. Moreover, by using a user's trusted device and only transferring user permissions within a certain range (physical proximity) to it, appropriate user permissions can "follow" a user who carries or is associated with the trusted device (first device). This may allow a primary user to set more restrictive permissions as a default for network devices (second device(s)) and/or (part of) their resources, than what they otherwise might get, since these more restrictive permissions are always relaxed when the trusted device is located within in a predefined range. Thereby, the overall security of the network can be enhanced, e.g., against intrusion-type attacks or resource misuse.

In some cases (i.e., user sensing), user permissions for sensing may be propagated only over a predefined range in which the user's trusted device could already sense similar data, meaning that the user permissions can be granted without increasing the risk of eavesdropping.

According to an option which may be combined with any of the above first to fifth aspects, a third-party service or device may be enabled (e.g., by the apparatus of the first aspect) to obtain ephemeral access rights to the second device and/or (part of) its resources based on the proximity/context of the first device to which the third-party service or device has analogous access rights for a target task.

According to a an option which may be combined with the first option or any of the above first to fifth aspects, it may be ensured (e.g., by the apparatus of the first aspect) that a minimum level of user permission is transferred to the second device to ensure that if a target task is capable of being performed by the first device, the target task can be performed by the second device while the first device is in a predefined physical proximity to the second device.

According to an option which can be combined with the first or second option or any of the above first to fifth aspects, the user permission information may comprise access rights, in particular access credentials, that allow connection to the second device.

According to an option which can be combined with any of the first to third options or any of the above first to fifth aspects, the user permission information may be transferred (e.g., by the apparatus of the first aspect) subject to a negotiation mechanism.

According to an option which can be combined with any of the first to fourth options or any of the above first to fifth aspects, the wireless network may be a smart home network, wherein the first device may be selected from a mobile device of an owner of the smart home network, a mobile device of a guest user of the smart home network, and a hub of the smart home network, and wherein the second device may be a smart home device.

According to an option which can be combined with any of the first to fifth options or any of the above first to fifth aspects, ephemeral access may be granted (e.g., by the apparatus of the first aspect) to guest users, that are unknown to the wireless network, based on a location and one or more permission of a known user's trusted device.

According to an option which can be combined with any of the first to sixth options or any of the above first to fifth aspects, the second device may be actively commanded (e.g., by the apparatus of the first aspect) to perform a task related to the user permission information.

According to an option which can be combined with any of the first to seventh options or any of the above first to fifth aspects, inbound access control may be provided (e.g., by the apparatus of the first aspect) by allowing a third party to obtain ephemeral access to the second device, provided that it is located in a predefined range around the first device.

According to an option which can be combined with any of the first to eighth options or any of the above first to fifth aspects, a set of actions to be performed by the second device in the wireless network may be determined (e.g., by the apparatus of the first aspect), the first device may be determined (e.g., by the apparatus of the first aspect) based on a matched location, and user permissions of the first device may be queried (e.g., by the apparatus of the first aspect).

According to an option which can be combined with any of the first to ninth options or any of the above first to fifth aspects, the hub may further comprise at least one of a location module configured to calculate a location of the first device relative to the second device, a permissions module configured to query, extract, negotiate and/or apply permissions of the first device and/or the second device, and a task module configured to obtain a set of actions to be performed by the second device and to identify one or more tasks that are associated with those actions.

According to an option which can be combined with any of the first to tenth options or any of the above first to fifth aspects, the first device may be a second hub and the second hub may interact with the hub to obtain access to a subset of the resources of the hub.

It is noted that the above apparatus may be implemented based on discrete hardware circuitries with discrete hardware components, integrated chips, or arrangements of chip modules, or based on signal processing devices or chips controlled by software routines or programs stored in memories, written on a computer readable media, or downloaded from a network, such as the Internet.

It shall be understood that the apparatus of claim 1, the mobile user device of claim 11, the hub of claim 12, the method of claim 14, and the computer program product of claim 15 may have similar and/or identical preferred embodiments, in particular, as defined in the dependent claims.

It shall be understood that a preferred embodiment of the invention can also be any combination of the dependent claims or above embodiments with the respective independent claim.

These and other aspects of the invention will be apparent from and elucidated with reference to the embodiments described hereinafter.

### BRIEF DESCRIPTION OF THE DRAWINGS

In the following drawings:
Fig. 1 schematically shows a summarizing architecture of an access control system according to various embodiments;
Fig. 2 schematically shows a process flow diagram of an ephemeral access control using the architecture of Fig. 1;
Fig. 3 schematically shows a flow diagram of an ephemeral access control procedure according to various embodiments; and
Fig. 4 schematically shows an exemplary use case of the ephemeral access control according to an embodiment.

### DETAILED DESCRIPTION OF EMBODIMENTS

Embodiments of the present invention are now described based on an IoT network or a 5G cellular network environment. An IoT network may refer to multiple wired and wireless networks such as Wi-Fi, Thread or Ethernet and the like, connected together to enable the IoT network deployed in a smart environment, e.g., a smart home. For instance, certain lighting systems are wired by means of Ethernet cables providing both communication and power while a user may still interact with such devices by means of a wireless phone supporting Wi-Fi, Thread, Bluetooth, or cellular connectivity.

Throughout the present disclosure, a "task" is to be understood as a given action that can be performed using capabilities of one or more devices (e.g., IoT devices or cellular devices). Examples may include using an actuator (for example, using a speaker to play music), receiving data from a sensor (for example, using a Wi-Fi-based occupancy sensor), and/or combining data obtained from the devices. The action performed by the devices as part of the task may or may not be their primary intended function. In a cellular network context (e.g., 3GPP), a task may be to use cellular infrastructure for wireless sensing. The task may also

Furthermore, a "hub" is to be understood as a connection point or network device that serves as places of convergence for data from one or more devices and then forwards the data in one or more other directions. It may have a built-in switch, which maintains the information necessary to determine how and where data is to be forwarded. In a smart home environment, an associated smart home app may act as a "universal remote" for all smart home devices, allowing the owner to monitor elements of the smart home network and automate, schedule and control tasks. Smart home hubs may be able to control many smart home and/or IoT-enabled devices and systems, including smart sensors on thermostats, lightbulbs, outlets and switches, door locks and sensors, doorbells, garage door openers, energy monitors, and window treatments/coverings and sensors. They can also control motion sensors, flood and leak sensors, smart radios and speakers, security systems and cameras, smoke and carbon monoxide detectors, irrigation controllers, and fans, water heaters and other household appliances. The "hub" may also be managed by a network operator or a smart home operator wherein the "hub" may rely on cloud resources and services to operate wherein those resource and services may include user management. In certain cases, there may be two or more "hubs" belonging to a same network operator or smart home operator. In other cases, there may be two or more "hubs" belonging to two or more network or smart home operators. In certain cases, "hubs" may need to orchestrate for the control of resources and/or devices they are managing at a point of time.

In addition, a "trusted device" is to be understood as a device, such as a mobile phone (e.g., smartphone), laptop, tablet or IoT device, or a "hub" that is frequently used to connect to (devices in) a network (e.g., smart home network). The Bring Your Own Device (BYOD) trend of individuals using their devices to accomplish work-related tasks continues to increase, thus widening the number and kinds of devices than may access the network. Therefore, devices must be designated as a secure, trusted device before they can be granted access to the network and its resources. A level of control over trusted devices may be implemented by using a process called mobile device management (MDM) which allows to monitor, manage and secure these devices, while still maintaining user flexibility.

Additionally, a "known user" is to be understood as any user whose trusted device has been commissioned to the hub. This may include a "primary user" who may be the owner of the hub and may include other users whose devices have been commissioned. In a cellular (e.g., 3GPP) context, the know user may be a user whose user equipment (UE) is part of the telecommunication system or is subscribed to a given service.

Moreover, a "guest user" is to be understood as a user whose trusted device is not necessarily commissioned to the hub, but which does have permission to use the devices for at least some tasks, either because a known user has shared credentials to them or because a known or primary user has allowed universal access to unknown devices for at least some tasks. In a cellular (e.g., 3GPP) context, the guest user may be a user whose UE is not part of the telecommunication system or is not subscribed to a given service.

Further, the abbreviation "gNB" (5G terminology) is intended to mean an access device/point such as a cellular base station or a Wi-Fi or Ultra-Wideband (UWB) access point. The gNB may consist of a centralized control plane unit (gNB-CU-CP), multiple centralized user plane units (gNB-CU-UPs) and/or multiple distributed units (gNB-DUs). The gNB is part of a radio access network (RAN), which provides an interface to functions in the core network (CN). The RAN is part of a wireless communication network. It implements a radio access technology (RAT). Conceptually, it resides between a communication device such as a mobile phone, a computer, or any remotely controlled machine and provides connection with its CN. The CN is the communication network's core part, which offers numerous services to customers who are interconnected via the RAN. More specifically, it directs communication streams over the communication network and possibly other networks.

Further, the terms "access device" and "network" and "system" are often used as synonyms in this disclosure. This means for example that when it is written that the "network" performs a certain operation it may be performed by a CN function of a cellular network, or by a specific base station that is part of such cellular network, and vice versa. It can also mean that part of the functionality is performed by the cellular network and part of the functionality by the base station.

Especially within smartphone operating systems, the issue of user permissions control has received attention. M. Marsch et a.: "Won't You Think of Others? Interdependent Privacy in Smartphone App Permissions", 2021 highlighted permissions 'leakage' between software applications (apps) or users as an emerging problem. This refers to the situation where a given app obtains higher levels of access (i.e., 'higher' permissions) than that which was granted by a user, because the higher permissions have been granted to a different app, or even on a different device, and the given app can in some way obtain information from the external source.

Ephemeral access control may be based on co-presence detection of a user to a smart speaker enabling temporary ownership (as described e.g. in L. Blue et al.: "Lux: Enabling Ephemeral Authorization for Display-Limited IoT Devices", IoTDI'21: Proceedings of the International Conference on Internet-of-Things Design and Implementation, May 2021, pp 15-27, ) or ephemeral ownership of IoT devices based on proximity - extending to user groups via homomorphic encryption (as described e.g. in H. Zhang et al.: "TEO: Ephemeral Ownership for IoT Devices to Provide Granular Data Control", MobiSys '22, Portland, OR, USA,).

A more extreme system in which IoT devices in the vicinity of a user only run code from a codebase trusted by the user's personal device is described in Y. Bae et al.: "Spacelord: Private and Secure Smart Space Sharing", ACSAC '22, December 5-9, 2022, Austin, TX, USA. Here, any changes made by the users to the IoT device's codebase are revoked after they leave the space.

Whether an app is asking for too many permissions can be determined by comparing it to its peers and asking whether the same task can be achieved with less permissions, as described e.g. in P. K. Tiwari et al.: "Identification of Possibly Intemperate Permission Demands in Android Apps", 2nd International Conference on Innovative Practices in Technology and Management (ICIPTM), 2022 (DOI: 10.1109/ICIPTM54933.2022.9753830).

Furthermore, the concept of tasks within personal computing and automatic task discovery and classification systems have been described e.g. in H. Shin et al.: "Automatic Task Classification via Support Vector Machine and Crowdsourcing", Hindawi, Mobile Information Systems, Volume 2018).

In general, user-centric or user-driven access control offers several benefits including ease of use as described e.g. in T. Ringer et al.: "AUDACIOUS: User-Driven Access Control with Unmodified Operating Systems", CCS '16: Proceedings of the 2016 ACM SIGSAC Conference on Computer and Communications Security, October 2016, pp 204-216 (https://doi.org/10.1145/2976749.2978344).

"Matter" is an open-source connectivity standard for smart home and IoT devices (Version 1 of the specification was published on 4 October 2022), which aims to improve interoperability/compatibility between different manufacturer and security by allowing local control as an option. In the Matter standard for consumer IoT devices, currently, control of most Matter hubs requires installing an app on the user's smartphone. Therefore, most users (at least those who are the owners of a hub) are likely to have a corresponding app already installed on their smartphone. Additionally, or alternatively, a user may have two or more hubs, wherein the hubs may belong to the same smart home operator / ecosystem or to different smart home operators / ecosystems, e.g., two different cloud companies. Two apps may then be required to control the smart home devices through said smart hubs.

In an example, a smart home enabled by Matter may allow devices in different networks (e.g., Wi-Fi and Thread networks) to communicate with each other over IP and higher-level application protocols. Users that want to control smart devices (e.g., via a smart phone) need to be "allowed" in the system. However, this is a cumbersome process because it requires configuring the smart phone of the user with credentials, e.g., to application credentials to access the smart home system or Wi-Fi keys. In a further example, a user may wish to have two different hubs at home and the user may wish to enable both hubs to control certain devices / resources, and even if the hubs may be managed/controlled by different smart home operators, the user may wish that the resource / device allocation to the hubs does not interfere with the final user experience.

The following embodiments are configured to provide intentional permission leakage to enable a useful functionality, by allowing users to deliberately leak their permissions to nearby devices.

Thereby, an ephemeral access control system can be provided, in which permissions from a trusted device (e.g., a Matter smart hub or user's smartphone) are deliberately 'leaked' (i.e., propagated) to nearby IoT devices or smart devices, such that the devices get permission to perform a given task, provided that the user of the trusted device has granted permission for the same or a similar task to be performed on the trusted device. The permissions which are propagated may be subject to a negotiation mechanism which ensures the target devices do not inherit "too many" permissions for the task at hand. Permissions may also include credentials (e.g., cryptographic keys) that allow the devices to connect to each other.

In this way, embodiments provide an access control system in which access control permissions for a first device are dependent on its physical and/or temporal proximity to a second device and the permissions present on the second device. This enables seamless third-party access to smart home devices, which is specific to a given user, without significant effort from the user either at setup or at run-time, since for many relevant tasks the permissions may have already been granted for use by the trusted device (e.g. smartphone).

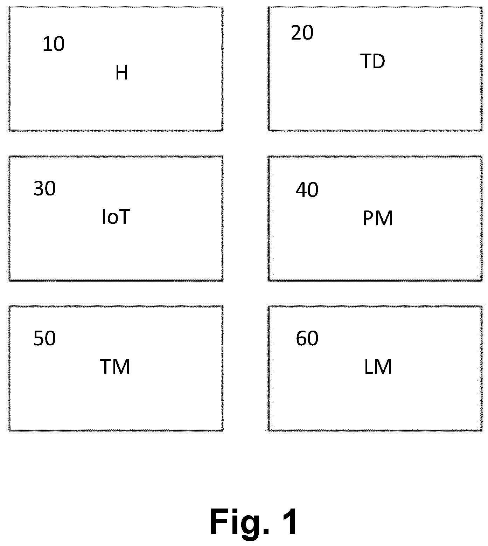

Fig. 1 schematically shows a summarizing architecture of an access control system according to various embodiments.

It is noted that throughout the present disclosure only those blocks, components and/or devices that are relevant for the proposed data distribution function are shown in the accompanying drawings. Other blocks have been omitted for reasons of brevity. Furthermore, blocks designated by same reference numbers are intended to have the same or at least a similar function, so that their function is not described again later.

According to Fig. 1, a hub (H) 10 is provided, which may be a central controller that manages a local network of one or more IoT devices 30 or multiple networks comprising the overall smart home. The hub 10 provides suitable connectivity and computing hardware to connect to the IoT devices 10, external devices, and cloud services, as well as making local computations. The Hub could be centralized or distributed. The hub may run locally in the local area or run in the cloud. An example would be a Hub in a Matter network, which might communicate with IoT Devices via Wi-Fi or Thread and connect to the external internet/backend/cloud/core network via Wi-Fi or Ethernet. Another example of the hub may be an access device (e.g., gNB) that may connect to a core network.

The at least one IoT device 30 may be any device which is part of the network managed by the hub 10. Examples include actuators (such as speakers, lights, etc.) and sensors (such as occupancy or biometric sensors or other sensor). The IoT devices 30 may contain suitable connectivity hardware to communicate with the hub 10.

Additionally, at least one trusted device (TD) 20 may be provided as a device that is likely to be carried or used by a user and which is configured to run apps and communicate with the hub 10. An example may be a user's smartphone, but other personal devices such as smart watches may also be appropriate. The trusted device may also be a hub itself owned by the user. The trusted device may also refer to two or more devices, e.g., a smart phone running an app with the subscription to a first hub.

Moreover, several algorithms (e.g., software routines) may be run by the hub 10 (to be accessed remotely) and/or may be run on one of the trusted devices 20. These algorithms may include a localization module (LM) 60, a permissions module (PM) 40, and a task module (TM) 50.

The localization module 60 may be configured to calculate respective location(s) of the trusted device(s) 20 relative to the IoT devices 30. Possible techniques may include direct localization techniques such as global navigation satellite systems (GNSS), or relative techniques such as examining the visibility of Wi-Fi access points as discussed in the above-mentioned article L. Blue et al.: "Lux: Enabling Ephemeral Authorization for Display-Limited IoT Devices"*.* Other techniques may include wireless ranging or wireless sensing. The localization may also be determined by scanning a QR code, e.g., printed on a local device or made available on the screen of a local device. The localization may also be determined by determining some features of certain IoT devices, e.g., blinking frequency of lights, sound produced by speakers, etc. In both cases, a "range" (e.g., a distance over which the trusted devices 20 are considered to be co-located with the IoT devices 30) may be set e.g. by a policy or may depend on a task to be performed or other parameters as detailed further below. The localization may also be determined by means of a protocol, for instance, a first hub may broadcast a localization message or show a QR code wherein that message/QR code may include an identifier. A second hub may receive the message or scan the QR code. The first hub may have also informed its first cloud service localization function about the ongoing localization procedure. The second hub may inform either (a) its own second cloud service localization function about the received/scanned identifier, that will then forward it to the first cloud service localization function for verification or (b) inform directly the first cloud service localization function.

Such identifier can be considered as/may be an authorization token authorizing the second hub to gain access to certain devices/resources in the IoT network / smart home system. The authorization token may include the devices / resources that may be used, the context in which they may be used (e.g., by which device, for which purpose, for how long, or where).

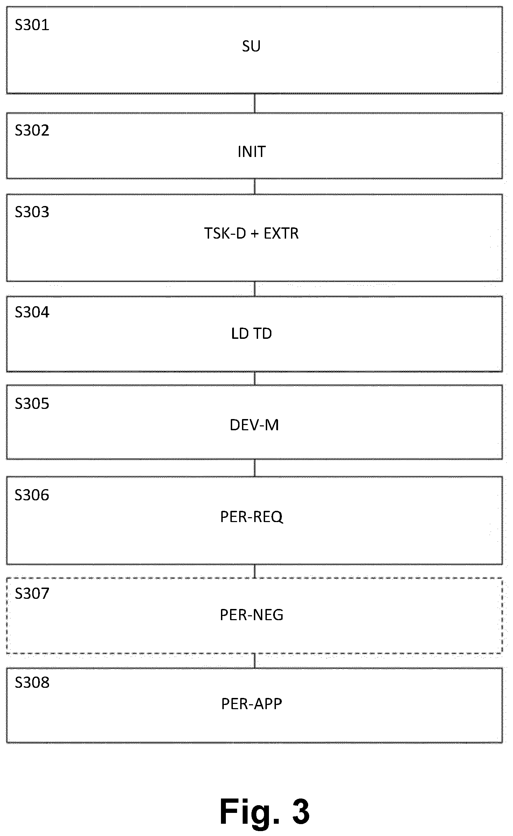

Furthermore, the permissions module 40 may comprise at least one of a set of algorithms for extracting/querying, negotiating and/or applying permissions both on the trusted devices 20 and the IoT devices 30. The permissions module 40 may run on the hub 10 or on the trusted devices 20 themselves. The algorithms to be used may vary depending on use case as described below (e.g., in step 306 of Fig. 3).

Additionally, the task module 50 may be configured to take a given desired set of actions to be performed by the IoT devices 30 and identify one or more tasks which are associated with those actions. Possible methods for identifying tasks may vary depending on the use case. Examples are given in step 303 of Fig. 3 below. A suitable approach may be a machine learning approach based on training different task classifiers, as discussed e.g. in the above-mentioned article H. Shin et al.: "Automatic Task Classification via Support Vector Machine and Crowdsourcing"*.* An aim may be to define the tasks at a suitable level of granularity such that an analogous task is likely to be able to be performed by the trusted device 20 (such that a user will likely have already allowed or denied permissions for that task).

In a cellular environment, the IoT devices 30 may be cellular devices (e.g., mobile phones) and the other components shown in Fig. 1 may be jointly located within a "cell", which is to be understood as an area of coverage provided by an access point (e.g., gNB) in a cellular network or other communications system.

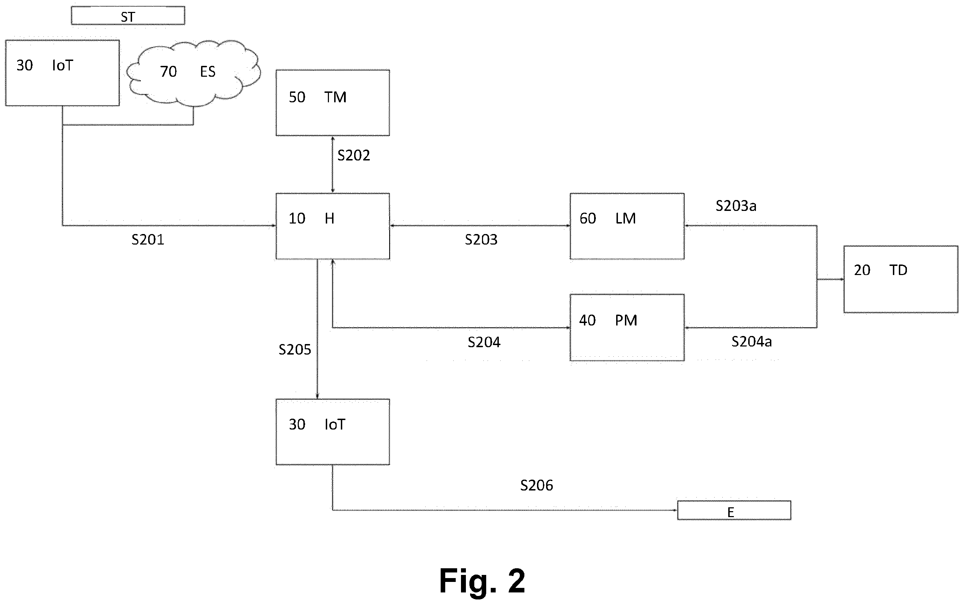

Fig. 2 schematically shows a process flow diagram of an ephemeral access control using the architecture of Fig. 1.

After start (ST) of the process, input is received at the hub 10 from an external service (ES) 70 e.g. via the Internet or from one or more of the IoT devices 30. The input may also be received at the hub locally, e.g., by pressing a button or sensing the proximity of a device. Then, in step S202, the task module 50 verifies or defines or retrieves one or more tasks that are relevant to the received input that may include an explicit task or a list of potential tasks. In step S203, the hub 10 may query locations of the trusted device(s) 20 from the location module 60. In response, the location module 60 may obtain in step S203a updated location data from/of the trusted device(s) 20, e.g., by initiating a query or a localization process.

Additionally, the hub 10 may query in step S204 permission(s) of the trusted device(s) 20 from the permission module 40. In response, the permission module 40 may obtain in step S204a updated permissions data from the trusted device 20, e.g., by initiating a query.

Based on at least one of the obtained task, location data and permissions data, the hub 10 modifies permissions on the IoT devices 30 accordingly in step S205.

Finally, in step S206, the IoT devices 30 can perform the task(s) while the trusted device(s) 20 remains in a predefined range. Then, the process ends (E).

In a first related embodiment, a guest access control is implemented, where ephemeral access can be granted to users who may be known or unknown to a given IoT system based on location and/or permissions of the user's trusted device 20.

An exemplary use case of such a guest access control may include allowing a guest to use home IoT devices owned by someone else with fine permissions control for certain pre-defined tasks, but without requiring significant effort from the guest user at run-time, nor from the IoT system owner at setup.

Wireless devices are used in smart home systems. Smart home systems may also be managed by multiple smart home hubs belonging to different smart home operators or ecosystems. Thus, in an exemplary scenario, a first user may have a smart home system using a given smart home hub / smart home operator and the first user may wish to temporarily use a second smart home hub / smart home operator. In another exemplary scenario, a second user used to or subscribed to a second smart home hub / smart home operator visits the first user using a first smart home hub / smart home operator. In this further scenario, ephemeral access may also refer to temporary access to all or part of the resources of a smart home system run by a first smart home operator by a second smart home operator. This capability is useful since this can allow multiple smart home operators to be enabled in a smart home while it makes clear which of the smart home hubs/operators is in control of certain resources at a time.

In examples, this may include so-called "northbound" and/or "southbound" permissions transfers to allow, e.g., a guest user to control or be sensed by nearby IoT devices 30, respectively, while inheriting the relevant permissions from their trusted device 20.

The difference between the two permission transfer approaches is that in the northbound approach, the guest user actively commands the IoT device 30 to perform a task (for example play music), whereas in the southbound approach, the IoT device 30 performs a task on the user (for example sensing the user).

In a second related embodiment, an inbound access control is implemented, where a third party can gain ephemeral access to IoT devices 30 which are in the vicinity (e.g., predefined range) of a known user, e.g., for back-end access.

Embodiments may comprise an initial initiation step (e.g., via a user or third-party request) which defines a set of actions which shall be performed by IoT devices in a network. In a subsequent task definition and extraction step, one or more relevant tasks may be extracted from an intended set of actions to be performed. The tasks may be checked against a database of allowable tasks or stored for use at the below fourth step which may be optional if the desired task corresponds to the action to be performed. Then, in a trusted device location determination and device matching step, the location of any of the trusted devices 20 (such as user's smartphones) relative to the IoT devices 30 is determined, such that the IoT devices 30 can be matched to a trusted device 20 within a pre-defined range.

In an optional permissions querying, negotiation and application step, the permissions present on the trusted devices 20 found to be in the predefined range of the IoT devices 30 which are relevant to the task to be performed are queried and/or extracted, e.g., by an app running on the trusted devices 20 or via communication with the hub 10. Where the defined task could be performed by the trusted device 20, these permissions may be temporarily applied to the nearby IoT devices 30 such that they can perform an analogous task, while the trusted device 20 remains in range. Optionally, if the permissions available on the trusted device 20 allow for higher access levels than would be the minimum needed to perform the task, then the permissions to be applied to the IoT devices 30 may be reduced to only be the minimum permission required (rather than inheriting unnecessarily high access rights from the trusted device 20). The application of these permissions may involve a creation of a temporal network or subnetwork and a creation and/or distribution of credentials associated with said (sub)network, e.g., to allow guest devices and/or IoT devices 30 to connect to each other, either directly or indirectly.

Thus, according to embodiments, an access control system for sharing user permissions is provided, wherein permissions are propagated from a first device (i.e., trusted device) to (a) second device(s) (i.e., IoT device(s)) based on one or more of the physical proximity of the devices (e.g., distance between the devices), (the task to be performed by the second device, and the available permissions (e.g., that are provided on the first device and that are relevant to that task).

In an example, if a guest is coming to a user's home, the user may want the Matter hub to create a temporary profile for the guest to access some resources in the smart home system, this may include, e.g., a Wi-Fi guest network for the guest. The user could ask the Matter hub to create such a temporary profile by using the user's phone which may show a QR code with all required information (e.g., WI-Fi SSID, passwords, Matter network, access rights) that the user can scan. With these credentials, the user can use the internet at the user's place, e.g., with a predefined profile, e.g., limited to certain Internet resources, and the Matter hub may allow for control of certain devices (that are currently in a different network) and/or resources of the devices in the user's home. The Matter hub may enforce this by monitoring the commands exchanged from the smart device of the guest to the smart home IoT devices. This may require that the guest user has to send the commands to the Matter hub that will execute them on behalf of the guest. Additionally or alternatively, the Matter hub may provide the guest's smart device with an authorization token to perform certain actions in the network so that the authorization token will be attached to the commands sent by the guest's smart device to the IoT devices. The IoT devices can verify the authorization of the guest user / smart device based on said authorization token. Such an exemplary system involves multiple devices (e.g., owner's smart phone, guest's smart phone, smart hub, smart IoT device), while physical proximity may be required between some of these devices. Additionally or alternatively, the permissions may as well be provided by the owner of the system, e.g., through the hub without using its own smart device.

In a further example, a third party may be allowed to gain ephemeral access rights to second device(s) to which they would normally have no access rights, based on the proximity of a first device or user to which that third party does have analogous access rights for a target task. For instance, if a guest and a main user are in the living room, and the guest wants to play a song in the smart speakers by sending it via his smart phone, the smart camera of the hub may extract the task that the guest wants to execute plus observe that the (main) user is next to the guest. Since the main user is next the guest, the access rights of the main user propagate to the guest for the specific action the guest wants to execute.

In some scenarios, it is described that the first device needs to be in range. Note that this may also indicate that the owner of the first device needs to be in proximity.

In another example, a negotiation mechanism may be provided, which ensures that minimum permissions are propagated to ensure that if a target task is capable of being performed by the first device, it can be performed by the second device(s) while the first device (or user) is in range.

Fig. 3 schematically shows a flow diagram of an ephemeral access control procedure according to various embodiments.

In the initial step S201 (SU), during a one-time setup phase, the owner of an loT system enables a task-based ephemeral access system and sets various options. In some cases, credentials are transferred to a guest's trusted device.

The one-time setup phase may thus be used to enable a primary user (e.g., the owner of a network containing IoT devices) to enable a task-based ephemeral access system and to set relevant preferences. During setup, it is assumed that the primary user has been authenticated and/or authorized to a hub (e.g., a local network's hub) of the access system. The primary user may perform setup using a trusted device in communication with the hub or using a different user interface. In the latter case, the primary user may be asked to register at least one trusted device or credentials (e.g., biometric credentials) as part of the setup process.

During setup, the primary user may enable several modes and may allow access for different classes of devices, as detailed below.

As an example, a task-based guest ephemeral access is a mode in which guest users can perform defined tasks using IoT devices. Guest users may require credentials to be transferred from the primary user (i.e., known guest mode) or some functionality may be enabled for any trusted device within range (i.e., generic guest mode).

To set up the known guest mode in step S301, the primary user may generate and transfer (or trigger the generation and transfer of) a suitable credential to the guest user. This credential may consist of any suitable data form and be transferred by any suitable means. The credential may also be generated by the hub and shared with the primary user who would then show/transfer it to the guest user. The guest user can use it to connect to the hub. One option could be sharing a secret key via a QR code. A second option could be to commission guest users' trusted devices to the hub directly. Once the guest user received the credential, they can verify this with the hub.

To set up the generic guest mode in step S301, the primary user does not need to perform any credentials transfer but may optionally set allowed types of guest devices and duration and/or range of their access.

In both known and generic quest modes, tasks which can be performed by guest users may be pre-defined or discovered dynamically. To set up pre-defined tasks, the primary user may select from a list of pre-defined tasks (wherein the hub may retrieve typical tasks from e.g. a cloud service and make them available for selection) or the hub may observe the primary user's normal usage of the IoT devices to derive common tasks (e.g., "play music") which are performed, and present the primary user with an interface to request the primary user to allow guest users to perform these tasks. The list of predefined tasks may also be common across multiple smart home operators/ecosystems to facilitate interoperability. This list of pre-defined tasks may be part of a standard.

As a further example, a third-party ephemeral access is a mode in which a third party can gain ephemeral access to IoT devices in the vicinity of a primary user('s trusted device). To set up this mode, the primary user may register trusted device(s) (or other credentials such as biometric information of authorized users) with the hub and may optionally select third-party services which can access the IoT devices without specific credential transfer. This may require setting up an open network that can be used by guest devices to connect without requiring explicit transfer of credentials, or this may require a policy wherein only certain commands received through the open network may be forwarded to and/or accepted by the IoT devices. Other options described in the invention may also be applicable.

Optionally, the primary user may set very restrictive access rights (very little permissions) for IoT devices that are not in the presence of a recognized user('s trusted device), meaning that the IoT devices have no or limited functionality when no known user is in their vicinity. For instance, the credentials of a user may refer to his voice and such biometric information may have been recorded. A smart speaker may have been configured to only perform certain commands from a user associated with said credentials.

In step S302 (INIT), initiation may be performed by an input received by the hub that manages at least one IoT device, wherein the input requires the loT device(s) to perform some action.

More specifically, the input may be, for example, a receipt of a spoken command at a smart speaker, a receipt of a backend input from a third party or cloud service, or a configuration request entered by a smart phone (e.g., located in close vicinity). The input may then be forwarded by the hub to the task module.

Then, in step S303 (TSK-D + EXTR), a task definition and extraction may be performed by the hub retrieving a list of tasks associated with the received input. The tasks may be automatically extracted, may be directly provided by a third party requesting access, or may be retrieved from a database, either local or remote.

In an example, the task module may be used to identify one or more tasks associated with (e.g., matching to) the input received at step S302.

For example, where a user requests a smart speaker to play music, this can be directly labelled as a "play music" task which is also likely to be present on a trusted device.

In some cases, the task module may need to combine actions to identify a potential task. For example, where IoT devices are to be used to sense a user's respiration, heart rate, gait, or other similar factors, the task module may identify a common task of "take biometric measurements", which may be a task to which the user has given permission e.g. via a smart watch, even though the physical form of the sensing present on the smart watch may be different.

In other cases, the task module may request a third party to define a task associated with a requested input. For example, where a banking service wishes to use an IoT device to identify liveness of a customer, permission to "activate lights" may be requested, which may assert to the task module that this is associated with the task "identify user" (which may be non-obvious to the task extraction algorithm). Whether the task module should trust these third-party assertions may be subject to a policy e.g., stored in the hub.

In yet other cases, the task module may run proactively in a setup phase. Such a proactive task identification may be re-run occasionally, for example if new IoT devices are added to the network or the trusted device is updated.

Finally, the identified tasks associated with the input are returned by the task module to the hub.

However, if an input was received directly in the form of a task to be performed (e.g., where an IoT device receives an input relating to a clear task and forwards this to the hub), then step S303 may be skipped.

In step S304 (LD TD), the location of a trusted device relative to the loT devices in the local network may be determined by the hub, e.g., by the localization module.

In case of a co-location detection, the trusted devices may only be localized relatively (i.e., relative to, e.g., the IoT devices). An example of a suitable technique is described in the above-mentioned article L. Blue et al.: "Lux: Enabling Ephemeral Authorization for Display-Limited IoT Devices", in which co-location between a mobile device and an IoT device is determined based on both devices having visibility of the same Wi-Fi access points.

In case of a direct localization, the trusted devices may be localized absolutely (for example using GNSS, or other indoor or outdoor localization techniques) and their location may be compared to that of the IoT devices. The location of the IoT devices may either be measured directly per device (e.g., using GNSS) or may be known to the hub e.g. via a pre-configured map.

Other localization techniques may include scanning a QR code on one of the devices and exchanging information on it, or monitoring actions/output of the (IoT) devices (e.g., signal strength, light output of smart lights, sound produced by smart speakers, etc.).

The location of the trusted devices is then returned by the localization module to the hub.

In step S305 (DEV-M), device matching and assignment is performed.

In embodiments this may be performed by an app running on the trusted device or via communication with the hub. The hub may match the trusted device to one or more loT devices based on range and task relevance of the loT devices. Furthermore, the hub may attempt to match and/or assign a set of IoT devices relevant to a given task to a nearby trusted device.

To achieve this, the hub may set an appropriate range over which to perform the matching and/or assignment. Alternatively, the range may be fixed and/or set by a policy. As a further alternative, the assignment may be based on a user configuration and/or consent.

Considerations for range setting may include the number of potential trusted devices in a given area. For example, where many smartphones are present in a network area, the range may be set such that each IoT device is uniquely within range of one smartphone (the nearest).

Furthermore, considerations for range setting may include the density of similar IoT devices in the network. For example, where there are many smart speakers in a house, the range may be set such that any trusted device can only be within range for one smart speaker at a time. This may help to avoid potential ambiguities in which speaker should take a given action.

Optionally, the range may be dependent on the task to be performed. For example, to allow certain tasks to be performed when a trusted device is anywhere in a house, while other require it to be in a certain area, e.g., a room.

As another option, the range may also be dependent on the capabilities of the trusted device. This may be useful specifically in the case of tasks which involve the IoT devices performing some sensing. In this case, the hub may match the range over which permissions are to be propagated with the range over which the trusted device could perform a similar sensing task itself. For example, if the trusted device could typically measure a biometric wirelessly over a 5m range, then the range may be set to 5m. This may be advantageous since it allows the IoT devices to only measure data which the trusted device could have measured anyway (i.e., the IoT devices cannot be used to extend sensing capabilities or 'eavesdrop' beyond the range of the trusted device) - yet the data they record may still be useful as it may provide an external check or additional viewpoint for data measured locally by the trusted device.

Then, the Hub may match potential trusted devices with IoT devices within the determined range. Where more than one potential trusted device is detected within the defined range, the hub may attempt to determine whether the request relates to one or other of the devices e.g., by device activity status (for example the hub may disregard potential trusted devices which have been inactive for a certain period of time).

Furthermore, the hub may attempt to discover e.g. by external means whether the request relates to the primary user or a guest user. This might be especially relevant where the request has originated from an IoT device in the network, which may have a means to recognize the primary user. For example, a smart speaker may have a voice model of the primary user.

As an example, the UE of a guest user may be brought in the home network so that the guest user can perform a limited number of actions with his UE. The guest user's UE may then be assigned to a guest network if the guest user's UE and the guest user are verified to be close, and a limited number of commands may be allowed for the guest user's UE, that may only be received over that specific guest network. The guest user may only be allowed to perform certain actions if the guest user is identified by means of his/her biometric information. Such biometric information of the guest user may be learned by the UE of the trusted user, the hub, and/or the IoT devices (e.g., smart bell), or may be transferred.

As another example, when a guest user wants to connect with her phone, the guest user may have to scan a QR code (e.g., on the hub) that may include parameters (e.g., a current QR code in Matter (e.g., a guest SSID) or a device provisioning protocol (DPP) parameter (e.g., the hash of a public key)). The guest user's UE may use such parameters to join the (Wi-Fi) network and/or Matter system. Other protocols may include the Extensible Authentication Protocol (EAP) running locally between the guest user's UE and the hub over the network access point (e.g., WI-FI AP).

Lacking any other means of determining that a user is present, the system may either revert to the default permissions for each IoT device or may use permissions relevant to either the highest or lowest of the ambiguous users, according to a policy.

In an embodiment, it is assumed that the highest level of permissions of any nearby trusted device would be used by default, since this enables high-priority users such as the primary user to continue using the IoT devices as normal even when they are close to other users (e.g., guest users).

It is noted that the precise order in which steps S303 to S305 are performed can be varied depending on application, or steps S303 to S305 may be performed simultaneously. In all cases, relevant data obtained from each step may be stored by the hub in a memory for use when required by one of the other steps.

In step S306 (PER-REQ), permission querying may be performed by extracting the permissions provided on the trusted device to determine whether the task(s) can be performed. In embodiments this may be performed by an app running on the trusted device, or via communication with the hub.

The permissions module may query the matched trusted device(s) to establish their permissions for carrying out the relevant task. This may in some cases be achieved by having the permissions module embodied as an algorithm which runs directly on the trusted devices, e.g., as part of an app linked to the hub. This app may directly query the user permissions for defined tasks already present on the trusted device. Alternatively, the hub may request that the trusted device informs it of the relevant permissions directly.

In step S307 (PER-NEG), a permissions negotiation may optionally be performed. A negotiation mechanism determines whether the same task could be achieved with fewer permissions. If so, the lower set is used. The permissions module may modify the permissions obtained from the trusted device so that the minimum level of permissions required to perform a given task are those which are applied to the IoT devices in the following step.

When performing a negotiation, it may also be negotiated which device or which user is in control of a certain IoT device/resources and for which context where the context may include priorities, time duration, or location. This feature is of particular interest to enable interoperability between two or more hubs, either of the same smart home operator or from different smart home operators. For the case of two hubs of different smart home operators, the first hub may indicate to the second hub the IoT devices / resources that the second hub may use according to said context. This can be seen as a form of ephemeral access by the second hub to the resources of the first hub. This capability may be of independent interest and used independently The minimum level of permissions for a task may be found by attempting to run the task in a virtual environment which matches to capabilities of the devices that will actually perform the task (i.e., the IoT devices) and successively reducing the permissions applied to the virtual devices until the task cannot be performed satisfactorily. The permissions applied to the real IoT devices would then be the lowest of the permissions provided on the trusted device and the permissions at the last stage at which the task could be performed satisfactorily by the virtual devices.

Finally, in step S308 (PER-APP), the relevant minimal permissions may be applied to the loT devices which match the required range and/or task relevance. That is, the relevant permissions for the task, as obtained from steps S306 and S307, are temporarily applied by the hub to the IoT devices to perform the task, provided that the trusted device remains within the defined range and/or for a limited time and/or when a given context applies (e.g., the guest user owning the trusted device is within the defined range).

Optionally, in addition to permissions, the permissions module may query and apply preferences from the trusted device to the IoT devices. For example, the permissions module may discover that a guest user has a preferred music service provider which differs from that of the primary user, and this service provider may be used to respond to tasks of the form "play music".

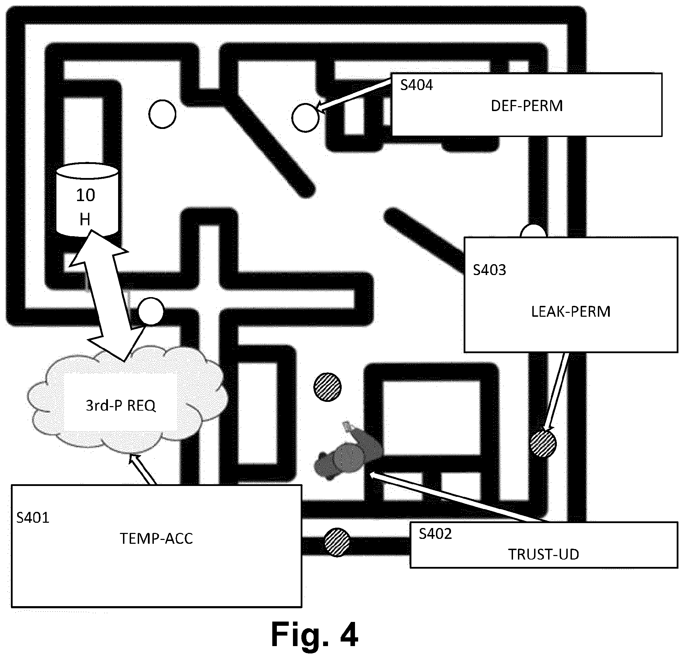

Fig. 4 schematically shows an exemplary use case of the ephemeral access control according to an embodiment. More specifically, a top view of a smart home environment with walls (bold black lines) and smart home devices (white and hatched circles) is shown, in which a guest user with a mobile device (e.g., smart phone) is located.

In step S401 (TEMP-ACC), a remote third party may temporarily access via an external network (e.g., internet) and a hub (H) 10 specific smart home devices (hatched circles) near the guest user for a given task, assuming that permission for that task is present on a trusted device (e.g., the mobile device of the guest user). This may be achieved by forwarding a third-party request (3^{rd}-P REQ) via the external network to hub 10.

In step S402 (TRUST-UD), the user activates the trusted device or points it towards the nearby smart home devices (hatched circles) so that permissions provided on the guest user's trusted device are deliberately "leaked" (transmitted) in step S403 (LEAK-PERM) to the nearby smart home devices, for a given task.

Step S404 (DEF-PERM) indicates that remote smart home devices (non-hatches while circles) out of the defined range retain their default permissions.

The scenario of Fig. 4 may be implemented in the following exemplary use cases.

In a guest access control use case, a guest user visits the home of a primary user who owns a smart home system running on Thread (which is a low-power, low-latency mesh network that allows smart devices to "talk" directly to each other) or Wi-Fi. The primary user wishes to configure the smart home system so that the guest user has access to some services of the smart home system (e.g., internet access, control of lights, play music on smart speakers, access to music in a local networkattached storage (NAS), etc.).

This may be challenging because the smart home system may be configured such that personal computers (PCs) are connected to a Wi-Fi network, smart IoT devices (lights, smart speakers) are connected to an IoT (Wi-Fi) network, while it is not desired to leak any of the passwords of those networks.

In an embodiment, the smart home system, by means of the hub 10, receives a request from the primary user to give access/permission to the guest user. To this end, the smart home system may (on behalf of the primary user) create a temporary Wi-Fi network, create a QR code with Wi-Fi network service set identifier (SSID) and password, set rights associated with the guest user, and set (allowed) routing rules, e.g., so that (only) control messages for IoT devices (e.g., lights, smart speakers) received through the temporary WiFi network are (allowed to be) routed to the IoT (WiFi) network. The smart hub 10 may then provide information (e.g., by means of a QR code), e.g., through the hub 10 itself or a trusted devices of the primary user so that the guest user can get the credentials. The access to the guest user may be available as long as the device of the guest user is present (and/or limited in time and/or dependent on another context). The context may also depend on the permissions given by the primary user. The guest user (or its smart device) may also receive other credentials, e.g., an authorization token, that may be presented to the IoT devices in the smart home so that the IoT devices can verify the ephemeral access right of the guest user. The creation, content, and verification of said authorization token may be part of a technical specification allow for interoperability.

In a northbound guest access control use case, a guest user visits the home of a primary user, wherein access may be allowed (i) based on credentials/keys/access rights associated with the guest user's device (e.g., UE) and wherein these are configured in the guest user's device (which may include creating a guest (Wi-Fi) network), and/or wherein access may be allowed (ii) based on biometrics of the guest user, that need to be learned (which may imply that when a guest user arrives, the guest user is sensed and biometrics are added so that based on the sensed biometrics, the user is authorised to perform certain actions).

Thus, in the above option (i), the primary user may transfer guest user's access credentials as in the "known guest mode" option of step 301 of Fig. 3.

In an example, the task of "play music" may be allowed by the primary user for known guest users. The guest user then requests a smart speaker (i.e., an IoT device) to play music. The smart speaker knows (e.g., from its voice model that is a form of biometric information) that the request did not originate from the primary user. Nevertheless, the hub 10 determines that the trusted device of the known guest user is located within a suitable range to the IoT device (smart speaker) and/or a voice task command fitting the biometric information of the guess user is given and allows the task. As a result, the smart speaker may use the preferred music service of the known guest user (as discussed at step 308 of Fig. 3) or the music service of the primary user who gave access rights to it. Later, a child may attempt to use the smart speaker to play music. This is disallowed because the trusted device of the child (even though it may be present) is not associated with a known guest user.

In a southbound guest access control use case, a hotel may enable certain tasks to be performed by any, unknown guest user on its IoT smart home system (which corresponds to the "generic guest mode" option of step 301 of Fig. 3).

The hotel may enable the task of sensing user biometric of the above option (ii), but only for guest users of a specific trusted device that is closest to the relevant IoT devices (an example of where the range may be dependent on the task to be performed, as discussed in step 305 of Fig. 3).

In an example, a hotel guest who is undergoing health monitoring asks the IoT devices in the hotel room to perform a task "sense heart rate". The trusted device of this generic guest user has a health monitoring app which has a permission for a task "access pulse monitor". Because the requested task "sense heart rate" is sufficiently analogous to the task "access pulse monitor" for which permission is present, the task module of the host 10 can match the tasks and the permissions module of the hub 10 can apply suitable permissions to the IoT devices in the hotel room. As a result, guest users can receive their heart rate data by identifying themselves to the hub 10. Optionally, explicit consent to perform sensing may be given by means of the IoT devices in the hotel room. This consent may have been given before in a general way to any (Matter/type X) devices when close by. However, as soon as the guest user leaves the hotel room, these permissions are automatically removed by the hub 10, since the trusted device exceeds the predefined range.

In a related example, the task module of the most 100 can match the task, but it is subject to an access control policy determined by the user wherein the user may enable or disable task-based ephemeral access to third devices. This has the advantage of giving more control to the user about the types of sensor devices that may perform different actions. This policy may also be part of a user subscription and stored in an entity such as a network function in telecommunications system such as the 5G core, e.g., the UDM. This policy may be handled or retrieved or distributed by another network function such as the PCF.

In a third-party (inbound) access control use case, the owner (primary user) of a home IoT system needs to be authenticated while on a video call to a bank and while being located near to several IoT devices including smart lights. To check the liveness of the user in the video, the video banking service (which is a third party service that is trusted by the hub 10 and/or smart device of the primary user and that trusts the hub 10 and/or the smart device of the primary owner) generates a request for the task "flash lights"/"IoT action" and sends it to the hub 10 and/or smart device of the primary user. However, the task module of the hub 10 cannot find an analogous task on the user's trusted device and may optionally ask the third-party service (video banking service) to provide a task. In response, the third-party service may optionally provide the task "authenticate user to X Bank".

Since the primary user may have the bank's app installed on the trusted device, the above permission may already be present and the hub 10 may allow the smart lights (i.e., IoT devices) to temporarily be controlled by the third-party service.

Note that all the above steps happen without user input.

Finally, the third-party service (i.e., video banking service) may then use the fact that the lights blinked to verify that the user is next to a given hub and/or IoT device and retrieve from it and/or verify with it further information (e.g., location) that can serve to authenticate/verify the identity of the user.

To summarize, a system and method for ephemeral access control have been described, wherein permissions (e.g., credentials) are deliberately propagated from a trusted device to nearby devices, such that the nearby devices get permission to perform a given task on condition that a user of the trusted device has granted permission for the same or a similar task to be performed on the trusted device.

While the invention has been illustrated and described in detail in the drawings and foregoing description, such illustration and description are to be considered illustrative or exemplary and not restrictive. The invention is not limited to the disclosed embodiments. It can be applied to various types of mobile devices, such as mobile phone, vital signs monitoring/telemetry devices, smartwatches, detectors, vehicles (for vehicle-to-vehicle (V2V) communication or more general vehicle-to-everything (V2X) communication), V2X devices, Internet of Things (IoT) hubs, IoT devices, including low-power medical sensors for health monitoring, medical (emergency) diagnosis and treatment devices, for hospital use or first-responder use, virtual reality (VR) headsets, etc.

In a cellular network implementation, any network access device (such as a base station, Node B (eNB, eNodeB, gNB, gNodeB, ng-eNB, etc.), access point or the like) may be used, that provides an access control service. Thus, at least some of the above embodiments may be implemented to provide enhanced network functions for 5G/6G/xG cellular networks.

Other variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. The foregoing description details certain embodiments of the invention. It will be appreciated, however, that no matter how detailed the foregoing appears in the text, the invention may be practiced in many ways, and is therefore not limited to the embodiments disclosed. It should be noted that the use of particular terminology when describing certain features or aspects of the invention should not be taken to imply that the terminology is being re-defined herein to be restricted to include any specific characteristics of the features or aspects of the invention with which that terminology is associated.

Furthermore, in those instances where a convention analogous to "at least one of A, B, and C, etc." is used, in general such a construction is intended in the sense one having skill in the art would understand the convention, e.g., "a system having at least one of A, B, and C" would include but not be limited to systems that have A alone, B alone, C alone, A and B together, A and C together, B and C together, and/or A, B, and C together, etc. In those instances where a convention analogous to "at least one of A, B, or C, etc." is used, in general such a construction is intended in the sense one having skill in the art would understand the convention, e.g., "a system having at least one of A, B, or C" would include but not be limited to systems that have A alone, B alone, C alone, A and B together, A and C together, B and C together, and/or A, B, and C together, etc. It will be further understood by those within the art that virtually any disjunctive word and/or phrase presenting two or more alternative terms, whether in the description, claims, or drawings, should be understood to contemplate the possibilities of including one of the terms, either of the terms, or both terms. For example, the phrase "A or B" will be understood to include the possibilities of "A" or "B" or "A and B.

At least some steps of the described operations like those indicated in Figs. 2 and 3 can be implemented as program code means of at least one computer program and/or as dedicated hardware of the related network device or function, respectively. The computer program may be stored and/or distributed on a suitable medium, such as an optical storage medium or a solid-state medium, supplied together with or as part of other hardware, but may also be distributed in other forms, such as via the Internet or other wired or wireless telecommunication systems.

## Claims

1. An apparatus for access control in a wireless network, the apparatus being adapted to control transfer, to a second device (30) from a first device (20), of a permission information for accessing the second device (30) based on one or more of
a physical proximity of the first and second devices (20, 30),
a task to be performed by the second device (30) based on the permission information, and
permissions information provided on the first device (20) relevant to the task.

2. The apparatus of claim 1, wherein the second device (30)
is one of a smart-device associated with a guest user or a smart hub interacting with the first device (20).

3. The apparatus of claim 1 or 2, wherein the apparatus is adapted to propagate permission information comprising at least one of:
- a list of authorized actions, resources, or IoT devices;
- a context under which the access can be performed wherein context may refer to location, proximity, time, or other conditions;
- priority of the received permission information.

4. The apparatus of any preceding claim, wherein the apparatus is adapted to enable a third-party service or device (70) to obtain ephemeral access rights to the second device (30) based on the proximity of the first device (20) to which the third-party service or device (70) has analogous access rights for a target task.

5. The apparatus of any preceding claim, wherein the apparatus is adapted to ensure that a minimum level of user permission is transferred to the second device (30) to ensure that if a target task is capable of being performed by the first device (20), the target task can be performed by the second device (30) while the first device (30) is in a predefined physical proximity to the second device (20).

6. The apparatus of any one of the preceding claims, wherein the user permission information comprises access rights, in particular access credentials, that allow connection to the second device (30).

7. The apparatus of any one of the preceding claims, wherein the apparatus is adapted to transfer the user permission information subject to a negotiation mechanism.

8. The apparatus of any one of the preceding devices, wherein the wireless network is a smart home network, wherein the first device (20) is selected from a mobile device of an owner of the smart home network, a mobile device of a guest user of the smart home network, and a hub (10) of the smart home network, and wherein the second device is a smart home device.

9. The apparatus of any one of the preceding claims, wherein the apparatus is adapted to grant ephemeral access to guest users, that are unknown to the wireless network, based on a location and one or more permission of a known user's trusted device (20).

10. The apparatus of claim 9, wherein the apparatus is adapted to actively command the second device (30) to perform a task related to the user permission information.

11. The apparatus of any one of the preceding claims, wherein the apparatus is adapted to provide inbound access control by allowing a third party to obtain ephemeral access to the second device (30), provided that it is located in a predefined range around the first device (20).

12. The apparatus of any one of the preceding claims, wherein the apparatus is adapted to determine a set of actions to be performed by the second device (30) in the wireless network, to determine the first device (20) based on a matched location, and to query user permissions of the first device (20).

13. A user device (20) comprising an apparatus of any of the preceding claims.

14. A hub (10) comprising an apparatus of any one of claims 1 to 12.

15. The hub (10) of claim 14, further comprising at least one of a location module (60) configured to calculate a location of the first device (20) relative to the second device (30), a permissions module (40) configured to query, extract, negotiate and/or apply permissions of the first device (20) and/or the second device (30), and a task module (50) configured to obtain a set of actions to be performed by the second device (30) and to identify one or more tasks that are associated with those actions.

16. A method of controlling access to a wireless network, the method comprising controlling transfer of a user permission information for accessing a second device (30) from a first device (20) to the second device (30) based on one or more of a physical proximity of the first and second devices (20, 30), a task to be performed by the second device (30) based on the user permission information, and user permissions information provided on the first device (20) relevant to the task.

17. A computer program product comprising code means for producing the step of claim 16 when run on a computer device.
